# EUROPÄISCHE PATENTANMELDUNG

(11) **EP 1 439 689 A1**
(43) Veröffentlichungstag der Anmeldung: **21.07.2004**
(21) Anmeldenummer: 03000869.2
(22) Anmeldetag: 15.01.2003
(51) Int. Cl.: H04N 1/195, H04N 1/00

(54) **Mobiltelefon mit einer Scan-Hilfe**

(71) Anmelder: SIEMENS AKTIENGESELLSCHAFT, 80333 München (DE)
(72) Erfinder: Simon, Markus, 81673 München (DE)

(57) **Zusammenfassung**

Die Erfindung betrifft ein Verfahren zum Scannen, insbesondere von Dokumenten, mit einer Kamera (K), wobei eine Folge von Bildern oder Teilbildern zu einem Ergebnisbild zusammengefügt wird, bei dem ein Referenzmuster (F) in das Kameragesichtsfeld projeziert wird, und bei dem auf Grundlage der geometrischen Information des Musters (F) in den einzelnen Bildern Abbildungsunterschiede in den Bildern kompensiert werden.

## Beschreibung

Die Erfindung betrifft ein Verfahren zum Scannen, insbesondere von Dokumenten, sowie ein Mobiltelefon gemäß dem Oberbegriff des Patentanspruchs 2.

Die Verwendung einer Kamera mit beispielsweise niedriger Auflösung zum Scannen von Dokumenten ist bekannt. Dabei wird die Kamera beziehungsweise das Mobiltelefon aus einem niedrigen Abstand über das Dokument bewegt. Aus den dabei aufgenommenen Bildern beziehungsweise Teilbildern wird ein Ergebnisbild generiert.

Die Aufzeichnung der Bilder erfolgt beispielsweise mit einer hohen Abtastfrequenz von typischer Weise 15 oder 30 Hertz. Benachbarte Bilder besitzen aus diesem Grund einen sehr hohen Bildüberlapp. Durch Aneinanderreihung von schmalen Bildstreifen aus der jeweiligen Bildmitte und unter Berücksichtigung der Kameraverschiebung kann ein hochauflösendes Ergebnisbild kontinuierlich aufgebaut werden.

Schon geringe Variationen des Abstandes zwischen Kamera und Dokument sowie eine leichte Verkippung der Kamera, wie sie bei einer in der Hand gehaltenen Kamera auftreten, führen jedoch zu sehr störenden Größenänderungen der abgebildeten Dokumenteninhalte. Die Größenänderungen müssen in einem ersten Verarbeitungsschritt untereinander ausgeglichen werden, damit das hochauflösende Ergebnisbild fehlerfrei aufgebaut werden kann. Die Bestimmung der Lage des Kamerasensors gegenüber dem Dokument insbesondere hinsichtlich Abstand und Verkippung ist die wesentliche und wichtige Voraussetzung zur Fehlerkompensation. Die Berechnung der relativen Lageinformation aus aufeinanderfolgenden Bildern ist ein bekannter Ansatz, der sehr komplex ist und meist sehr instabile Ergebnisse liefert. Verkippungen der Kamera gegenüber dem Dokument können im Allgemeinen nur sehr schwer auf der Basis der aufgezeichneten Bildinformation durch Bildverarbeitung erfasst werden.

Der Erfindung liegt die Aufgabe zugrunde bei einem Verfahren zu Scannen und bei einem Mobiltelefon das Scannen von Dokumenten zu erleichtern.

Diese Aufgabe wird erfindungsgemäß für ein Verfahren durch die im Patentanspruch 1 und für ein Mobiltelefon durch die im Patentanspruch 2 angegebenen Merkmale gelöst.

Das erfindungsgemäße Verfahren beziehungsweise Mobiltelefon ermöglicht die schnelle und robuste Bestimmung der relativen Lage des Kamerasensors gegenüber dem Dokument.

Erfindungsgemäß wird in das Gesichtsfeld der Kamera ein Referenzmuster eingeblendet. Die Auswertung der Geometrie des Musters in den Bildern ermöglicht die Kompensation der Abbildungsunterschiede in den Bildern.

Ein kleines Referenzmuster wird permanent an die gleiche Position innerhalb des Kameragesichtsfeldes projiziert und durch einen Bildverarbeitungsalgorithmus in dem aufgezeichneten Bild ausgewertet. Aus der geometrischen Information des auf die Dokumentenoberfläche projizierten und im Sensor abgebildeten Referenzmusters ist die Lage des Sensors relativ zum Dokument eindeutig im dreidimensionalen Raum bestimmt. Durch das Verwenden eines Referenzmusters ist die Extraktion der notwendigen geometrischen Information zur Kompensation der Abbildungsunterschiede in Bildern mit den Methoden der digitalen Bildverarbeitung sehr robust und schnell und erfolgt unabhängig von dem Inhalt des gescannten Dokumentes.

Ein geeignetes Referenzmuster ist zum Beispiel ein kleines Fadenkreuz, das permanent an die gleiche Position innerhalb des Kameragesichtsfeldes projiziert wird. Aus der Information der Fadenkreuzgröße (Abstand) und der relativen Längen der Fadenkreuzachsen (Verkippung in x und y Richtung) ist die Lage des Sensors relativ zum Dokument eindeutig im dreidimensionalen Raum bestimmt.

Zusammenfassung der Vorteile des Verfahrens:
- Schnelligkeit und Robustheit in der Bestimmung der relativen Lage des Sensors zum Dokument
- Sehr genaue Bestimmung des Abstands und der Verkippung des Sensors unabhängig von dem Inhalt des gescannten Dokuments.

Im folgenden wird die Erfindung anhand eines in der Zeichnung dargestellten Ausführungsbeispieles beschrieben.

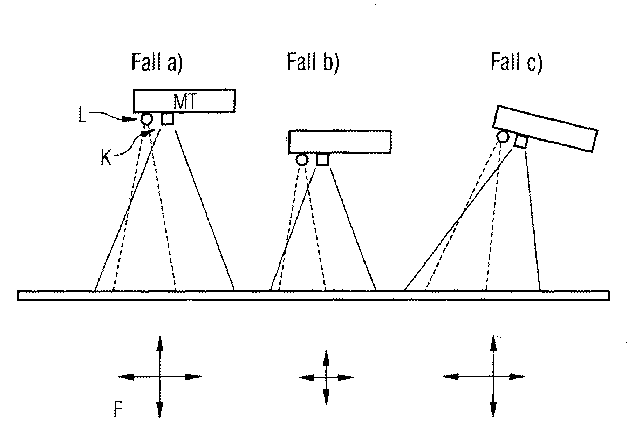

Das Verfahren zur Lagebestimmung einer Kamera K relativ zu einem Dokument (nicht näher bezeichnet) wird, wie in der Figur 1 dargestellt, beispielsweise auf einem Handy oder Mobilfunkgerät realisiert, das die folgenden Merkmale besitzt:
- Kamera K beispielsweise auf der Rückseite des Mobiltelefons MT zur Aufzeichnung von Bildern aus der Umgebung
- Prozessor zur Verarbeitung der Bildinformation und zur Bestimmung der relativen Sensorlage
- Leuchtdioden L auf der Rückseite des Handys MT zur Projektion eines Fadenkreuzes F in das Gesichtsfeld der Kamera K.

Zum Einscannen, beispielsweise eines Dokumentes, wird das Mobiltelefon MT in einem geringen Abstand über das Dokument bewegt. Die charakteristischen Merkmale der Projektion eines Referenzmusters F zur Bestimmung der relativen Sensorlage werden an einem konstruierten Beispiel grob skizziert:

### Fall a) im Vergleich zu Fall b)

Die Kamera ist in Fall a) und b) parallel zur Dokumentenoberfläche. Der Abstand der Kamera zum Dokument ist in Fall a) größer als in Fall b). Das projizierte Fadenkreuz F im Kamerabild ist aus diesem Grund im Fall b) kleiner als in Fall a). Die Fadenkreuzgröße steht in unmittelbarem Zusammenhang mit dem Sensorabstand und kann jeweils aus dem Kameraeinzelbild errechnet werden.

### Fall c)

Die Kamera K beziehungsweise der Kamerasensor ist gegenüber der Dokumentvorlage verkippt. Aus der absoluten Größe des Fadenkreuzes im Zusammenhang mit der Information über die relativen Längen der Fadenkreuzachsen kann die Lage des Sensors im 3 dimensionalen Raum gegenüber dem Dokument eindeutig bestimmt werden.

## Patentansprüche

1. Verfahren zum Scannen, insbesondere von Dokumenten,
mit einer Kamera (K), wobei eine Folge von Bildern oder Teilbildern zu einem Ergebnisbild zusammengefügt wird,
bei dem ein Referenzmuster (F) in das Kameragesichtsfeld projeziert wird, und
bei dem auf Grundlage der geometrischen Information des Musters (F) in den einzelnen Bildern Abbildungsunterschiede in den Bildern kompensiert werden.

2. Mobiltelefon (MT) mit einer Kamera (K) und mit einer Bildverarbeitungseinrichtung zur Generierung eines Ergebnisbildes aus den bei einem Scanvorgang gewonnenen Bildern oder Teilbildern,
**gekennzeichnet durch**
eine Projektionseinrichtung (L), über die ein Referenzmuster (F) in das Kameragesichtsfeld projizierbar ist, und
Mittel zur Kompensation von Abbildungsunterschieden in den einzelnen Bildern auf Grundlage der geometrischen Information des Musters (F) in den Bildern.
